# EUROPEAN PATENT APPLICATION

(11) **EP 3 552 529 A1**
(43) Date of publication of application: **16.10.2019**
(21) Application number: 18425027.2
(22) Date of filing: 10.04.2018
(51) Int. Cl.: A47J 47/00

(54) **AN INNOVATIVE CHOPPING BOARD EQUIPPED WITH A PROTECTIVE EDGE**

(71) Applicant: Cheli, Gabriele, 57122 Livorno (LI) (IT)
(72) Inventor: Cheli, Gabriele, 57122 Livorno (LI) (IT)
(74) Representative: Emmi, Mario

(57) **Abstract**

The present invention refers to a chopping board (1) having an edge (6) which delimits its shape and characterized by the fact of comprising a protective gasket (10) applied along at least a part of said edge.

## Description

### Technical field

The present invention concerns the technical field of chopping boards for food.

In particular, the invention refers to an innovative chopping board which is made in such a manner not to chip in the event of accidental fall and, in case, not to slip as it leans against a vertical wall.

### Background art

Chopping boards for food have been known for a very long time. They may be made of various material such as wood, plastic, lava stone, marble, etc.

The chopping board is a support surface onto which an user may put specific food to cut them according to desired size and/or shape.

For example, chopping boards are often used for cutting vegetables, such as onion, garlic, potatoes, etc. It is also possible to cut other food such as meat or bread.

Thanks to the chopping board, it is possible to use the knife, thus avoiding to damage the surfaces of the kitchen or particularly delicate and expensive surfaces, such as those ones of the kitchen or the kitchen table.

Therefore, the user may arrange foods to be cut onto the chopping board and cut them safely, thus cutting or scraping the chopping board instead of the surface on which is placed the chopping board.

As described, many types of chopping boards exist and for example, artisan sellers are commonly found in trade fairs, selling their own products fully made of wood (even fine woods).

Obviously, as described, other materials may be used.

Provided that, an important technical inconvenience concerns the protection of the chopping board itself in case of accidental fall. The chopping board, depending on its shapes, may be heavy and exceed 3 or 4 Kilograms (for example, professional chopping boards of butchers). When the chopping boards falls to the ground by accident, it is likely to chip and then break. Depending on the material and the workmanship, it may be very expensive. Therefore, the accidental fall of the chopping board may cause an economic damage, if the chopping board is damaged.

Moreover, also the surface onto which the chopping board falls, may be also damaged. For example, a tile may crush.

Another problem concerns the stability of the chopping board, as it leans against a vertical surface, for example as it has been washed after use. Thus, the chopping board leans against a horizontal surface only through a part of its edge, while another part of its edge leans against a vertical wall. The chopping board is not balanced in such a slanting condition and it may slip and fall to the ground, above all in the event of wet surfaces.

The issue of the stability of the chopping board, in operating horizontal configuration or in leaning position against a vertical wall is felt particularly on boats where the rolling due to waves destabilizes the chopping board.

### Disclosure of the invention

It is therefore the aim of the present invention to provide an innovative chopping board, for domestic or professional use as well, solving said technical inconveniences.

In particular, the aim of the present invention is to provide an innovative chopping board which, in the event of fall, is protected from damaging, thus protecting in turn also the surfaces onto which it crashes.

Moreover, it is the aim of the present invention to provide an innovative chopping board owning strong hold, thus favouring the cutting or not slipping away as it leans against a vertical wall.

It is therefore the aim of the present invention to provide a chopping board which is stable also when it is used on boats

These and other aims are then obtained through the present chopping board, according to claim 1.

According to the invention, the chopping board (1) comprises at least a protective gasket (10).

All the said technical inconveniences are easily solved in this manner.

In case of accidental fall, the gasket will validly protect from the crash and absorb the shock.

Moreover, the gasket, depending on the material of which it is made and the position thereof, gives a certain resistance degree which favours the stability of the chopping board both on the horizontal flat surface where it fully lies and on the vertical surface against which it slantingly lies with a part thereof lies on a horizontal surface.

This embodiment allows to make the chopping board particularly stable, even when it is used on boats.

Advantageously, the chopping board has an edge (6) which delimits its shape. Said gasket is preferably applied along at least a part of said edge.

Generally, if the chopping board falls, it will hit a part of the edge. Thanks to the gasket applied along the edge, it will form a sort of bumper, like cars, thus protecting the edge of the chopping board itself as well as the surface hit by it.

By realizing a gasket of suitable height, it can exceed at least one of the two cutting surfaces, such that, as soon as the chopping board leans against a surface, the gasket itself becomes a stable support with stronger hold.

Different materials may be provided.

Advantageously, the gasket is certainly made of a material with a high impact energy absorption and/or high deformability.

In this manner, it absorbs better impacts, operates better and generates a higher coefficient of friction.

By way of example, advantageously, said gasket can be made of one of the following materials or a combination thereof:
- Plastic material, such as rubber;
- Silicone material;
- Cellulose-base materials;
- Caoutchouc.

It is also disclosed here a gasket configured for being applied along an edge delimiting a chopping board.

Advantageously, said chopping board has closed annular shape in such a manner as to be fully applicable along the chopping board for fastening the whole edge.

It has preferably a certain degree of elastic deformation, for example as it is made of rubber, in such a manner to enlarge for fastening the chopping board in elastic manner and to be applied in easy and rapid manner.

Preferably, in that case, such a closed annular gasket has a shape which retraces the outline of the chopping board.

This feature is important to ensure the correct hold to chopping boards with particular shapes, which may comprise a handle, for example.

It is also disclosed here a method for realizing a chopping board, providing the step of realization of the chopping board and the subsequent application of a protective gasket.

Further advantages are inferable by the remaining dependent claims.

### Brief description of drawings

Further features and advantages of the present chopping board, according to the invention, will become apparent from the following description of preferred embodiments thereof, given only by way of non-limiting, indicative, example, with reference to the accompanying drawings, wherein:
- Figure 1 depicts a view from above of a chopping board, according to the present invention;
- Figures from 2A to 3 depict a view of the section A-A indicated in figure 1 with two prospective kinds of different gasket applicable to the chopping board and depicted by way of non-limiting example;
- Figure 4 separates a section of the gasket from the edge of the chopping board to which it is applied;
- Figure 5 is an example of use in which the chopping board, leaning slantingly against a vertical wall, does not slip thanks to the gaskets;
- Figure 6 is a variation of application of the gasket to the edge of the chopping board by means of a mechanical joint rather than the use of glue;
- Figure 7 is a further example of functionality of the chopping board equipped with such a gasket as it is applied onto a horizontal working surface;
- Figure 8 is an axonometric view of a chopping board equipped with a gasket arranged along the edge:
- Figure 9 and 10 depict a further embodiment of gasket formed by two strips (10a, 10b) foldable in such a manner that a strip can be connected to the edge 6 of the chopping board and the other clear strip (10b) is foldable from an extended position, in which it stands from the edge of the chopping board, and a retracted position in which it flanks the edge of the chopping board or vice versa.

### Description of some preferred embodiments

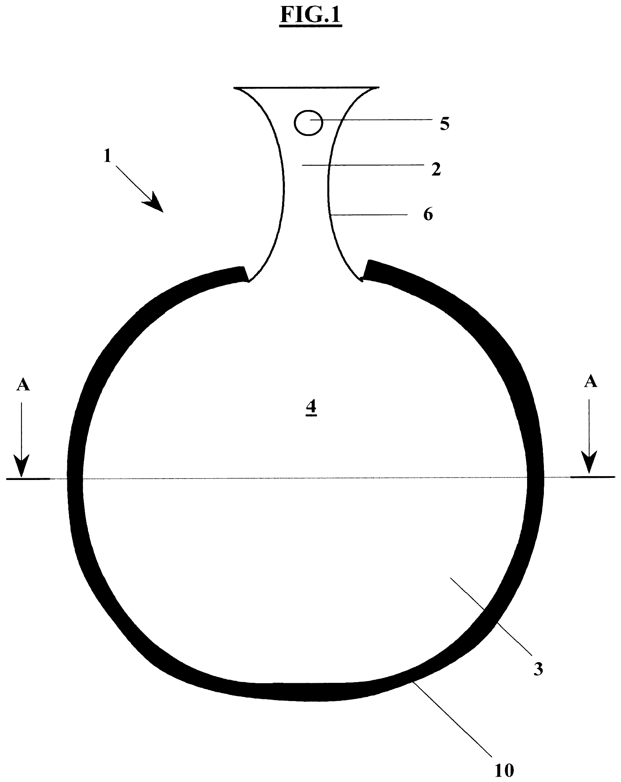

Figure 1 depicts a chopping boards according to the invention. The shape of the chopping board is obviously not limiting and is depicted in figure 1 only by way of an example. Therefore, other shapes may be provided, triangular or square shape for example, without departing from the present scope of the invention.

The chopping board 1 may also comprise a handle 2 through which the user can handle it, raise or move it for example.

In some cases, the handle can be provided with means for hanging it to a suitable hook on the wall, for example a hole 5 in which the hook hung to the wall may be inserted.

However, there are many chopping boards without handle. Obviously, the invention comprises any kind of chopping boards with or unprovided with handles, of any shape and material.

As known, the chopping board has a lower and an upper surface which form the support surfaces on which the cut occurs while in use.

In the event of a handle, the body of the chopping board 3 is connected to the handle and, also in this case, it forms a lower and an upper surface.

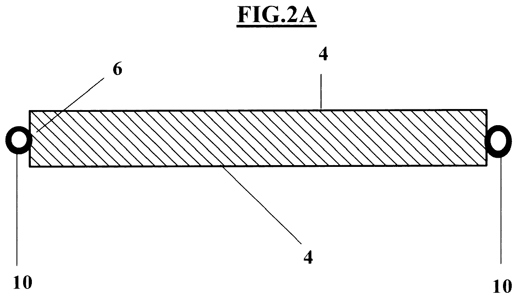

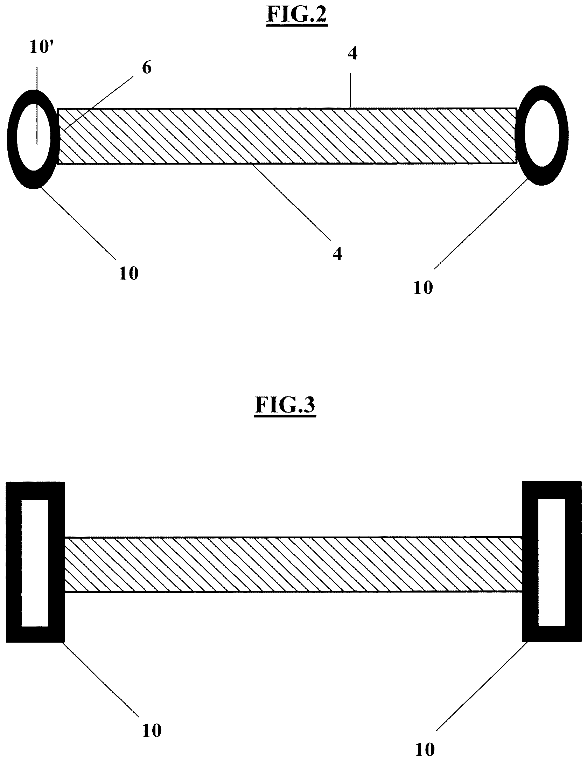

As already disclosed, both surfaces are generally useful and usable as support surface on which various product are cut. Therefore, number 4 of figure 1 depicts the upper surface while the other surface (see also section of figure 2) is provided to the opposite side.

Obviously, the chopping board is equipped with an edge 6 which shapes and forms the perimeter of the chopping board.

According to the invention, a gasket 10 is applied around at least a part of the whole edge 6.

In this manner, in case of fall to the ground, the chopping board hitting the part of the edge is provided with such a shock-absorbing gasket, thus protecting both the chopping board and the surface hit by the chopping board.

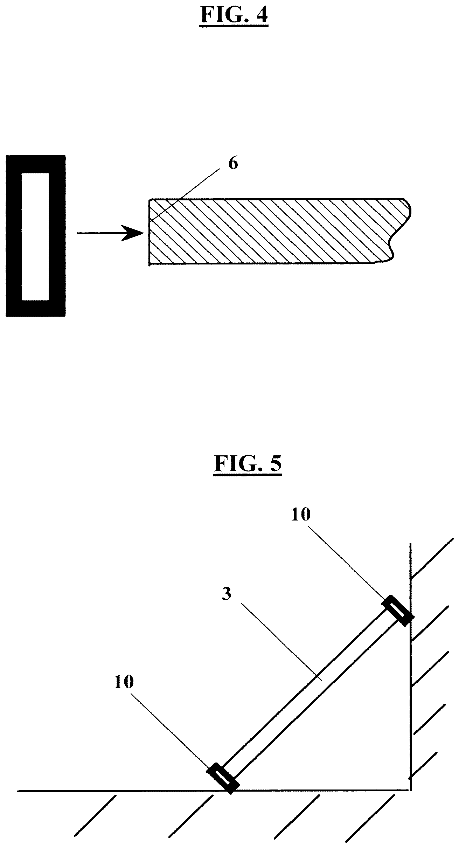

Moreover, as outlined in figure 5 and described further in more detail, depending on the sizes of the selected gasket, as soon as the chopping board leans slantingly against a corner of a wall (therefore between a horizontal and a vertical surface), in this case, the gasket becomes an anti-slip element which prevents the chopping board from slipping towards the horizontal surface.

Lastly, depending on the selected sizes of the gasket, the chopping board itself has a greater grip and hold even on the horizontal surface as it lies against the surface for the normal use. In this manner, cuts can be made in easier manner as the grip of the chopping board to the surface against which it leans is greater.

Moreover, such an embodiment ensures a greater stability on boats.

The gasket can be arranged onto the whole edge forming the chopping board, or, as an alternative, it may be arranged onto parts of the edge, for example along the edge forming the cutting surface 4, thus excluding a part or the whole edge forming the handle (in the event of the optional handle).

Obviously, the embodiment with the whole edge protected by such a gasket is certainly the preferred one, as the whole perimeter of the chopping board is protected, including the optional handle.

The gasket might be made of any material.

For example, preferred materials are plastic materials, such as rubber, silicone rubber, polyester rubber, therefore natural or artificial rubbers.

Other possible materials might be silicone materials such as high temperature silicone or artificial materials, cellulose-based material or caoutchouc.

Plastic material, such as rubber, as well as silicone materials are preferred, as they are easily workable and highly deformable, as well as having a high degree of grip.

For instance, rubber has a high degree of strain and elongation, thus favouring also the shock absorbing effect in case of impact.

With reference to figures 2 and 3, it is described a section A-A of the chopping board to highlight the application of the gasket 6 onto the edge.

The gasket may be easily prebuilt in form of a strip which is glued (or fixed in other ways, for example by means of hot-melt adhesive or mechanical interference) along the whole edge or part of the edge of the chopping board.

Particularly, this is valid with gasket made of rubber or silicone material, even if the realization in form of a strip may be made also of other materials.

The transversal section of the gasket may be of any shapes. For example, in a not limiting manner, figure 2 depicts an oval section while figure 3 depicts a rectangular section.

Both these sections may be internally hollow, thus forming an air-filled cavity 10'. In fact, this creates a shock-absorbing cushion which better absorbs the impact.

However, other shapes, such as square or circular ones might be realized without departing from the present scope of the invention. All these shapes may be internally hollow or full.

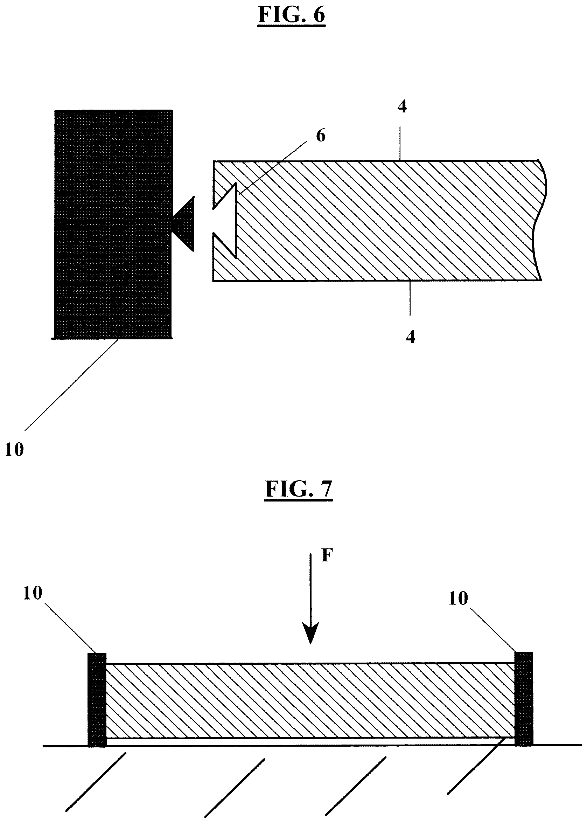

For example, figure 6 depicts a gasket with full section.

The application of the gasket around the edge does not necessarily require gluing.

Another kind of application is possible by realizing a receiving seat (for example swallow-tailed) carved along the edge of the chopping board and in which an end of the gasket is inserted with complementary shape. Figure 6 depicts an outline of such an embodiment. An opposite embodiment would also be possible, i.e. a cavity along the gasket, in which is inserted an appendix obtained along the edge of the chopping board.

Gaskets may also have an open side, for example with C-shaped section, thus being able to overlap one another and hold inside them the whole thickness forming the edge 6 of the chopping board.

Moreover, subject to what has been disclosed above, the gasket might be with closed annular shape, preferably retracing the shape of the chopping board and with such a size as to border the chopping board with a certain degree of elastic winding force. Substantially, it is possible to take advantage of the elasticity of the gasket with closed annular shape for enlarging it in such a manner as to fasten the whole edge of the chopping board and to release it in such a manner as to wind the whole chopping board with a certain degree of force due to the returning elastic tension at rest.

Advantageously, the gasket of such an embodiment might be realized with C-shaped transversal section, in such a manner as to form an open side which is constrained with the edge 6 to optimize the grip. Such an embodiment with the coupling between the gasket and the edge of the chopping board would not need any glue to fasten the gasket to the edge of the chopping board, even if the embodiment described above, such as gluing, may be applied as well to such an embodiment.

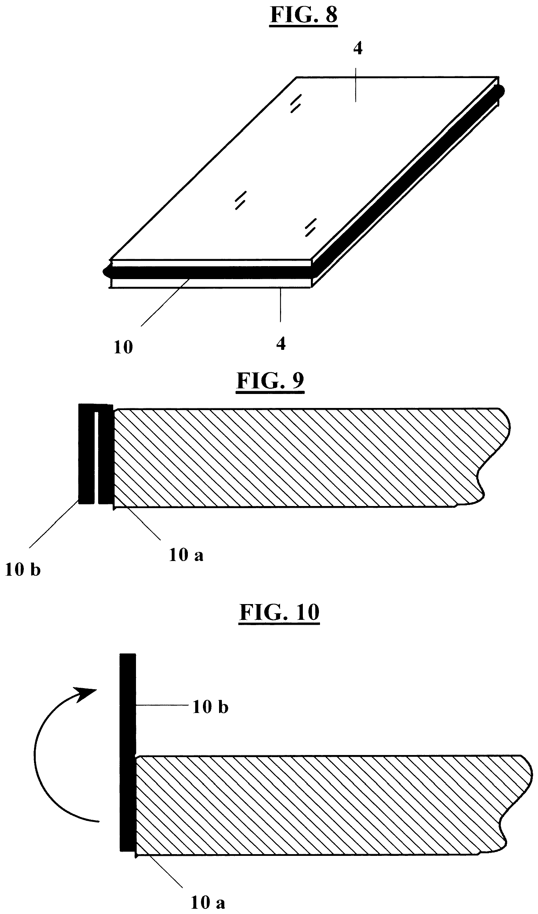

The gasket can be of any height, for example lower than the overall height of the edge 6, as depicted in figure 2A or in the axonometric view of figure 8.

As depicted in the examples of figure 2 and figure 3, preferably the gasket is of such a height as to exceed a certain amount over the two cutting surfaces 4.

For example, it can be obtained with an embodiment of C-shaped gasket whose opening seats the whole thickness of the edge 6, while in the other cases described it is necessary to select a suitable height of the gasket.

In this manner, the protection is more effective, as in the event of a fall, even if the chopping board falls in flat manner and not to the corner, the gasket would become a protection. Moreover, a height of the gasket greater than the height of the thickness of the edge to which it is applied protects better the whole thickness of the edge, in particular on the corner which may easily chip.

Moreover, as the chopping board is leaning against a horizontal surface indifferently on one or the other surface 4, the gasket contacts the surface 4 thus creating an anti-slip grip. Few exceeding millimeters would be enough to obtain such a grip effect, as outlined in figure 7 for example.

Lastly, brands and/or handles may be easily and permanently applied onto the surface of the gasket.

The same gasket may be holed for holding lights, led, and similar ones, with decorative purpose.

The same gasket may have handles acting as cutlery box support.

A further embodiment of the gasket is depicted in figure 9 and figure 10.

Subject to what has been disclosed above, the gasket may be made in this case by two strips (10a, 10b) foldable each other and whose the first strip 10a connected to the edge 6 and the second strip 10b folded near the first one. The second strip 10b may be folded upwards thus generating a containment enclosure around the surface 4 from which it stands (see figure 10).

This particularly simple embodiment allows to use the gasket in order to create a containment surface formed by the surface 4 of the chopping board and delimited by such a vertical wall 10b formed by the gasket.

This could be useful to prevent food placed on the chopping board from accidentally falling.

If it is required, after the use, the gasket can be folded from said extended position to the original retracted position (as per figure 9).

Such an embodiment may be applied onto the whole perimeter of the chopping board od onto predetermined parts, for example, by coupling such an embodiment to another one described above.

Such an embodiment may be very functional in some particular events. In fact, some chopping boards are used in restaurants for serving meat which is placed onto a heated stone arranged onto the chopping board. In this manner, the vertical wall of the gasket would be useful as a containment. Moreover, providing slots for cutlery would allow to serve a full kit including also cutlery necessary for cutting the served meat. Therefore, in that case, the chopping board would advantageously act as a tray.

It is also possible to realize gaskets, preferably with closed annular shape, of such sizes and shapes to be applied onto preexisting trays.

## Claims

1. A chopping board (1) **characterized by the fact of** comprising a protective gasket (10).

2. A chopping board, according to claim 1, wherein said protective gasket (10) is applied along at least a part of the edge (6) of the chopping board.

3. A chopping board, according to claim 1 or 2, wherein the protective gasket (10) is a prefabricated element detached from the chopping board and applied to it.

4. A chopping board, according to one or more of the preceding claims, wherein the protective edge (10) is glued along the edge (6).

5. A chopping board, according to one or more of the preceding claims, wherein the protective edge (10) is mechanically fastened along the edge (6).

6. A chopping board, according to one or more of the preceding claims, wherein the protective gasket (10) is in form of a closed annular element which is elastically fastened around said edge (6).

7. A chopping board, according to one or more of the preceding claims, wherein the protective gasket (10) is shaped in transversal section, in such a manner as to form an open side in which the edge (6) is inserted, for example with C-sectional shape.

8. A chopping board, according to one or more of the preceding claims, wherein the edge (6) is equipped with a passage in which an appendix of the gasket is fastened or vice versa.

9. A chopping board, according to one or more of the preceding claims, wherein the overall height in transversal section of the gasket is greater than the transversal thickness of the chopping board.

10. A chopping board, according to one or more of the preceding claims, wherein the transversal section of the gasket is internally hollow and forms an inner chamber (10'), preferably air-filled.

11. A chopping board, according to one or more of the preceding claims, wherein said protective gasket comprises an excess (10b) movable between a raised position, where it stands from the cutting surface (4) of the chopping board, and a lowered position where it returns onto the edge (6).

12. A gasket configured to be applicable around an edge delimiting a chopping board and wherein said gasket has closed annular shape.

13. A gasket, according to claim 12, wherein said gasket retraces the outline of the chopping board.

14. A method for realizing a chopping board providing the step of realization of the chopping board and the subsequent application of a protective gasket.

15. A method, according to claim 14, wherein said protective gasket is applied at least along a part of the edge (6) of the chopping board.
